# EUROPEAN PATENT SPECIFICATION

(11) **EP 2 070 782 B1**
(45) Date of publication and mention of the grant of the patent: **15.06.2011**
(21) Application number: 08171142.6
(22) Date of filing: 09.12.2008
(51) Int. Cl.: B60R 25/02

(54) **Attachment and supporting structure for a vehicle steering lock**
Befestigungs- und Halterungsanordnung für ein Kraftfahrzeuglenkradschloss
Structure de montage et support pour une serrure de volant d'un véhicule.

(30) Priority: 10.12.2007 IT TO20070892
(43) Date of publication of application: 17.06.2009
(73) Proprietor: TRW Automotive Italia S.p.A, 10129 Torino (IT); Fiat Group Automobiles S.p.A., 10135 Torino (TO) (IT)
(72) Inventor: Graglia, Daniele, 10026, SANTENA (IT); Gherlone, Giuseppe c/o FIAT GROUP AUTOMOBILES S.p.A., 10135, TORINO (IT)
(74) Representative: Jorio, Paolo

(56) References cited:
- EP-A- 0 094 568
- EP-A- 0 731 005
- EP-A- 1 564 091
- US-A- 5 548 981
- US-A- 5 636 540
- US-A- 5 730 011

## Description

The present invention relates to a supporting and attachment structure for a vehicle steering lock.

As is known, vehicles in general, and motor vehicles in particular, are normally provided with a steering lock to lock or hold a steering shaft actuated by the steering wheel of the vehicle in an angularly fixed position with respect to a fixed tubular member, inside which said steering shaft extends, e.g. EP0731005 A which describes such a steering lock according to the preamble of claim 1.

The steering lock comprises a supporting and attachment structure, which is suitable to be locked to said fixed tubular member and, in order to limit its weight, is, generally, made by moulding aluminium alloys. The structure is shaped so as to delimit a slideway for an angular locking member, commonly known as a "nose", and to define a seat for a key lock unit, through which the locking member or nose is displaced from and towards an operational locking position, in which it angularly retains the steering shaft to the fixed tubular member to prevent the vehicle from being steered.

The key lock unit is provided with a radial retaining member or tooth, which, when the lock unit is correctly positioned in the relative seat to control the angular locking member, is released or brought to rest against an axial stop member of the structure so that the lock unit cannot be removed from the seat, at least when the relative key has been removed from said lock unit. This guarantees the continuous angular locking of the steering shaft.

The distance of the axial stop member from the opening of the seat depends on the length of the lock unit and arrangement of the mobile member on said lock unit, so that in some cases, said axial stop member is arranged relatively closely to the opening of said seat.

The above arrangement facilitates theft in that it suffices and is relatively easy, using ordinary lock-picking tools or normal chisels, to break the part of the structure between the axial stop member and said opening to remove the lock unit from the seat and thus free the steering shaft from the angular locking position in which it was held.

The object of the present invention is to provide an attachment and supporting structure for a vehicle steering lock, the characteristics of which enable the problem described above to be overcome in a simple and inexpensive manner.

According to the present invention there is provided an attachment and supporting structure for a vehicle steering lock; the structure comprising a portion for attaching to a fixed retaining member and a supporting portion delimiting a seat provided with an opening communicating with the outside and suitable to receive a key lock unit that can be inserted into the seat through said opening; the supporting portion bearing a stop member for a retaining member of said key lock unit suitable to cooperate with said stop member to prevent the extraction of said key lock unit from said seat, and characterized in that it also comprises a reinforcing member arranged between said opening and said stop member and made of a material having a mechanical strength greater than that of the material used to make said supporting portion.

Preferably in the structure described above, the reinforcing member is at least partially sunk in said supporting portion.

Moreover, said reinforcing member is preferably made of steel.

The present invention will now be described with reference to the accompanying drawings, illustrating a non-limiting embodiment thereof, in which:
figure 1 is a perspective view of a preferred embodiment of an attachment and supporting structure for a vehicle steering lock; and
figure 2 is a cross-sectional view, with some parts removed for the sake of clarity, of an end portion of the attachment and supporting structure of figure 1.

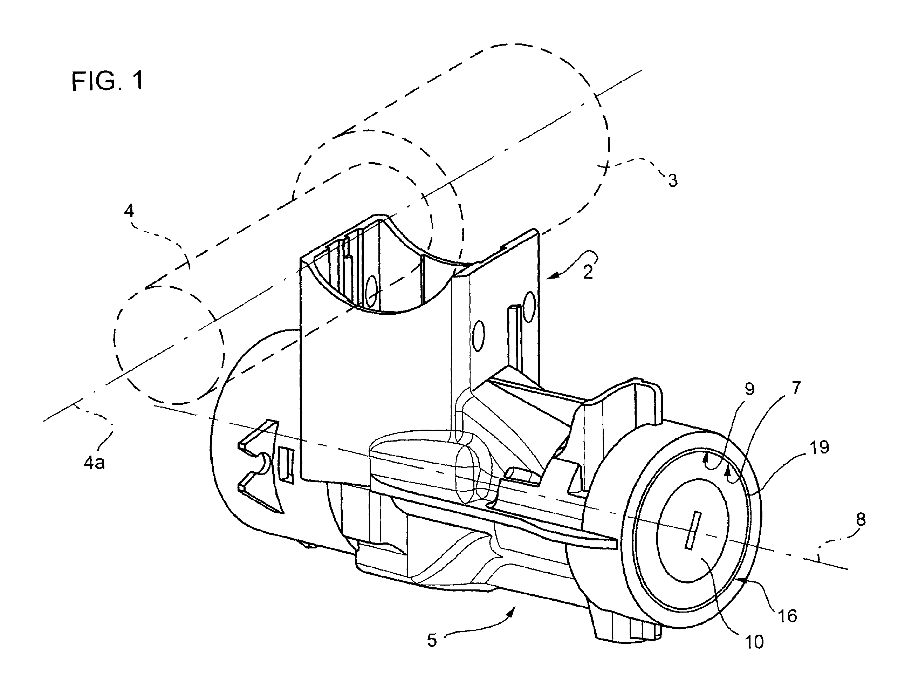

In figure 1 designated as a whole with number 1 is an attachment and supporting structure for a vehicle steering lock. The structure 1 is preferably made of an aluminium alloy and comprises a portion 2 for attaching to a fixed retaining member 3 and for partially housing a steering shaft 4, and a supporting portion 5. The attachment portion 2 supports a slideway for an angular locking member, commonly known as a "nose" and not visible in the attached drawings. The angular locking member is moveable through a lateral opening in the retaining member 3 between a retracted home position, and an advanced locking position, in which it engages a recess of the steering shaft 4 locking the latter in a fixed angular position with respect to the member 3.

The portion 5 delimits a cylindrical seat 7, which extends coaxially to an axis 8 orthogonal to the axis 4a of the shaft 4, is provided with an opening 9 communicating with the outside and is shaped so as to receive a key lock unit 10, of a known type, inserted into the seat 7 through the opening 9.

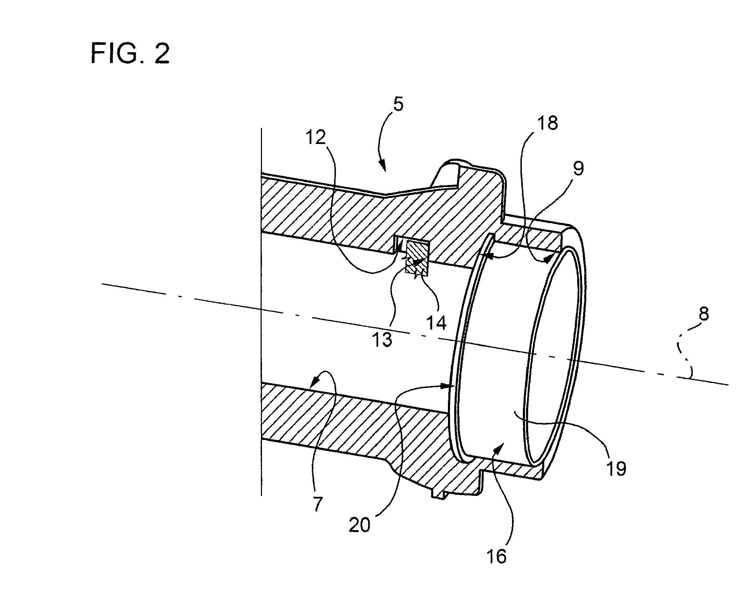

With reference to figure 2, the supporting portion 5 is provided, in the particular example described here, with a blind hole or radial recess 12 extending orthogonally with respect to the axis 8 and delimited laterally on the side facing the opening 9 by a flat supporting and backing wall 13, against which there is arranged an end section of a retaining member 14 carried by the key lock unit 10 and suitable to cooperate with the flat wall 13 to prevent the extraction of the key lock unit 10 from the seat 7 when the key of the key lock unit 10 has been removed from said key lock unit.

With reference to figure 1 and, in particular, to figure 2, the supporting portion 5 carries a reinforcing member 16, which, in the example described, is sunk in the supporting portion 5 between the opening 9 and the flat wall 13. Also in the particular example described here, the reinforcing member 16 consists of an annular body, which extends starting from the opening 9 and terminates against an internal annular shoulder 18 defined by the portion 5 to delimit an end section of said seat 7. The reinforcing element 16 comprises a cylindrical ring-shaped portion 19 extending coaxially to the axis 8 starting from the opening 9 and terminating, on the side facing the wall 13, with an external radial flange 20 (figure 2), which is integral with the cylindrical ring-shaped portion 19, is arranged so as to rest against the shoulder 18 and is sunk in the portion 5.

The reinforcing member 16 is made of a different material from that of the portion 5 and, in particular, of a material having a mechanical strength greater than that of the material of which said portion 5 is made. Conveniently, the reinforcing member 16 is made of steel or of sintered materials.

The particular arrangement of the reinforcing member 16 and the fact that the latter is sunk in the supporting portion 5 and is made of a different material from that used to make said portion 5 and, in particular, of a material having a mechanical strength greater than that of the supporting portion, make it possible to obtain an attachment and supporting structure 1 that is definitely more theft-proof than the known structures and which would, in any case, take longer to break using ordinary lock-picking tools or equipment.

The use of the reinforcing member 16 achieves the above advantages without making any significant difference to the weight or cost of the structure 1.

From the above it is apparent that modifications and variations may be made to the structure 1 described herein without departing from the scope of the claims.

In particular, the reinforcing member 16 could have a different geometry from that described and, for example, a reticulated or ribbed structure with the aim of improving attachment to the supporting portion 5 and/or to reducing its weight as much as possible.

Moreover, the reinforcing member 16 could be completely sunk in the portion and thus not delimit the seat 7 for the key lock unit or extend in a cantilevered fashion from the supporting portion 5 to define an extension of said portion 5 and an opening section of the seat 7. The reinforcing member 16 could even be made as a single piece with the supporting member at the time of producing said supporting member or welded to said supporting member 5, or it could be fitted or forced on an end section of the supporting portion 5 in order to surround said end section.

Lastly, the reinforcing member 16 could comprise an appendix extending outside the blind hole 12 so as to obstruct access to the supporting and backing wall, and any direct action on the retaining member 14 carried by the key lock unit 10.

Finally, the reinforcing member 16 could be made of a different material from that illustrated by way of example, but in any case such as to provide a further obstacle in the event of attempted theft.

## Claims

1. Attachment and supporting structure (1) for a vehicle steering lock; the structure (1) comprising a portion (2) for attaching to a fixed retaining member (3) and a supporting portion (5) delimiting a seat (7) having an opening (9) communicating with the outside and suitable to receive a key lock unit (10) that can be inserted into the seat (7) through said opening (9); the supporting portion carrying a stop member (13) for a retaining member (14) of said key lock unit (10) suitable to cooperate with said stop member (13) to prevent the extraction of said key lock unit (10) from said seat (7), and **characterized in that** it also comprises a reinforcing member (16) arranged between said opening (9) and said stop member (13) and made of a material having a mechanical strength greater than that of the material used to make said supporting portion (5).

2. Structure according to claim 1, **characterized in that** said reinforcing member (16) is at least partially sunk in said supporting portion (5).

3. Structure according to claim 1 or 2, **characterized in that** said reinforcing member (16) is made of steel.

4. Structure according to one of the claims from 1 to 3, **characterized in that** said reinforcing member (16) comprises an annular body extending inside said supporting portion to partially delimit said seat (7).

5. Structure according to claim 4, **characterized in that** said annular body extends starting from said opening (9).

6. Structure according to claim 4 or 5, **characterized in that** said annular body comprises a ring-shaped portion (19) extending starting from said opening (9) and terminating on the side facing said stop member (13) with an external radial flange (20).

## Patentansprüche

1. Befestigungs- und Halterungsanordnung für ein Kraftfahrzeuglenkradschloss (1), umfassend ein Teil (2) zum Befestigen eines festen Halteelementes (3) und ein Tragteil (5), das einen Sitz (7) begrenzt, der eine Öffnung (9) aufweist, die mit der Umgebung kommuniziert und geeignet ist, eine Schlüsselverriegelungseinheit (10) aufzunehmen, die in den Sitz (7) durch die Öffnung (9) eingeführt werden kann; die Trageinheit trägt einen Anschlag (13) für ein Halteelement (14) der Schlüsselverriegelungseinheit (10) zum Zusammenarbeiten mit dem Anschlag (13), um das Herausziehen der Schlüsselverriegelungseinheit (10) aus dem Sitz (7) zu verhindern, **dadurch gekennzeichnet, dass** ein Verstärkungselement (16) vorgesehen ist, angeordnet zwischen der Öffnung (9) und dem Anschlag (13), hergestellt aus einem Material, das eine mechanische Festigkeit hat, die größer ist, als jene des Materiales des Tragteiles (5).

2. Anordnung nach Anspruch 1, **dadurch gekennzeichnet, dass** das Verstärkungselement (16) wenigstens teilsweise in das Tragteil (5) eingelassen ist.

3. Anordnung nach Anspruch 1 oder 2, **dadurch gekennzeichnet, dass** das Verstärkungselement (16) aus Stahl besteht.

4. Anordnung nach einem der Ansprüche 1 bis 3, **dadurch gekennzeichnet, dass** das Verstärkungselement (16) einen ringförmigen Körper aufweist, der sich innerhalb des Tragteiles erstreckt, um den Sitz (7) teilsweise zu begrenzen.

5. Anordnung nach Anspruch 4, **dadurch gekennzeichnet, dass** sich der ringförmige Körper von der Öffnung (9) ausgehend erstreckt.

6. Anordnung nach Anspruch 4 oder 5, **dadurch gekennzeichnet, dass** der ringförmige Körper einen ringförmigen Teil (19) aufweiset, der sich von der Öffnung (9) aus erstreckt und mit einem äußeren Radialflansch (20) an jener Seite endet, die dem Anschlag (13) zugesandt ist.

## Revendications

1. Structure de fixation et de support (1) pour une serrure de blocage de direction d'un véhicule ; la structure (1) comprenant une partie (2) pour fixer à un élément de retenue fixe (3) et une partie de support (5) délimitant un siège (7) ayant une ouverture (9) communiquant avec l'extérieur et approprié pour recevoir une unité de verrouillage de clé (10) qui peut être insérée dans le siège (7) à travers ladite ouverture (9) ; la partie de support supportant un élément de butée (13) pour un élément de retenue (14) de ladite unité de verrouillage de clé (10) approprié pour coopérer avec ledit élément de butée (13) afin d'empêcher l'extraction de ladite unité de verrouillage de clé (10) dudit siège (7) et **caractérisée en ce qu'**elle comprend également un élément de renforcement (16) agencé entre ladite ouverture (9) et ledit élément de butée (13) et réalisé avec un matériau ayant une résistance mécanique supérieure à celle du matériau utilisé pour réaliser ladite partie de support (5).

2. Structure selon la revendication 1, **caractérisée en ce que** ledit élément de renforcement (16) est au moins partiellement enfoncé dans ladite partie de support (5).

3. Structure selon la revendication 1 ou 2, **caractérisée en ce que** ledit élément de renforcement (16) est réalisé en acier.

4. Structure selon l'une quelconque des revendications 1 à 3, **caractérisée en ce que** ledit élément de renforcement (16) comprend un corps annulaire s'étendant à l'intérieur de ladite partie de support pour délimiter partiellement ledit siège (7).

5. Structure selon la revendication 4, **caractérisée en ce que** ledit corps annulaire s'étend à partir de ladite ouverture (9).

6. Structure selon la revendication 4 ou 5, **caractérisée en ce que** ledit corps annulaire comprend une partie de forme annulaire (19) s'étendant à partir de ladite ouverture (9) et se terminant sur le côté faisant face audit élément de butée (13) avec un rebord radial externe (20).
